# EUROPEAN PATENT APPLICATION

(11) **EP 4 553 353 A1**
(43) Date of publication of application: **14.05.2025**
(21) Application number: 23209500.0
(22) Date of filing: 13.11.2023
(51) Int. Cl.: F16K 15/06

(54) **CHECK VALVE AND MANIFOLD WITH CHECK VALVE**

(71) Applicant: Robert Bosch GmbH, 70442 Stuttgart (DE)
(72) Inventor: Gomola, Marek, 58606 Jihlava Vysocina (CZ)

(57) **Abstract**

The present invention relates to a check valve (10) for a high-pressure H2-system (100), especially for a manifold (110) of the high-pressure H2-system (100), the check valve (10) comprising a main body (20) with an inlet interface (22) for connecting the check valve (10) to a refuelling infrastructure (150) and an outlet interface (24) for connecting the check valve (10) to the high-pressure system (100), wherein the main body (20) comprises a flow channel (26) fluid communicatingly connecting the inlet interface (22) to the outlet interface (24), a piston (30) being arranged in the main body (20) and being movable between an open position and a closing position to open and close the flow channel (26) against a sealing seat (28) of the main body (20), wherein the flow channel (26) is arranged at least partially around the piston (30), a piston holder (32) with a piston spring (34), wherein the piston holder (32) and the piston spring (34) are at least partially arranged inside the piston (30), wherein the piston spring (34) is designed to push the piston (30) into the closing position, wherein the piston holder (32) is attached to an inside of the main body (20). Furthermore, the invention relates to a manifold (110) for a high-pressure H2-system (100), the manifold (110) comprising at least one check valve (10).

## Description

The present invention relates to a check valve for a high-pressure H2-system, especially for a manifold of the high-pressure H2-system. Furthermore, the invention relates to a manifold for a high-pressure H2-system, the manifold comprising at least one check valve.

### Prior art

Known high-pressure systems for hydrogen comprise check valves for handling the flow of hydrogen into for example a manifold of the high-pressure system. The manifold is typically used for distributing the hydrogen from an inlet port of the manifold to a number of outlet ports of the manifold in order to provide hydrogen to a number of tanks and/or hydrogen-consumer means. High-pressure systems for hydrogen are typically used in different use cases, for example as a fuel providing system in modern drive units for vehicles and/or automobiles.

The known check valves are very limited in their flow rate and/or their flow range for the hydrogen. The flow rate is typically limited by the design of the check valve, especially the inner design of the check valve.

### Disclosure of the invention

The invention claims a check valve for a high-pressure H2-system, especially for a manifold of the high-pressure H2-system, with the features of independent claim 1. Furthermore, the invention discloses a manifold for a high-pressure H2-system with the features of independent claim 9. Further advantages and details of the invention result from the depending claims, the description and the drawings. In this context, features described in relation to the check valve according to the invention naturally also apply in relation to the manifold according to the invention and vice versa in each case, so that reference is or can always be made mutually with regard to the disclosure concerning the individual aspects of the invention.

According to a first aspect of the invention, the invention discloses a check valve for a high-pressure H2-system, especially for a manifold of the high-pressure H2-system. The check valve comprises a main body with an inlet interface for connecting the check valve to a refuelling infrastructure and an outlet interface for connecting the check valve to the high-pressure system, wherein the main body comprises a flow channel mutually connecting the inlet interface to the outlet interface for fluid exchange, a piston being arranged in the main body and being movable between an open position and a closing position to open and close the flow channel against a sealing seat of the main body, wherein the flow channel is arranged at least partially around the piston, a piston holder with a piston spring, wherein the piston holder and the piston spring are at least partially arranged inside the piston, wherein the piston spring is designed to push the piston into the closing position, wherein the piston holder is attached to an inside of the main body.

The refuelling infrastructure is preferably to be understood as some kind of fuel station, a stationary or mobile tank unit and/or some other source of fuel, preferably hydrogen.

The main body of the check valve is preferably understood as an enclosure and/or casing of the check valve. The main body of the check valve is designed as a single piece or as multiple connected pieces of the main body. Preferably the main multiple pieces of the main body are screwed to each other. The main body of the check valve is preferably made from austenitic stainless steel for the advantageous usage of the check valve with hydrogen. Austenitic stainless steel is preferably used due to enough resistance against hydrogen embrittlement. Preferably the connection of the pieces of the main body each comprise at least one sealing member. The check valve comprises the flow channel, which preferably guides hydrogen through the check valve from the inlet interface to the outlet interface. Thereby the flow channel mutually connects the inlet interface to the outlet interface for fluid exchange. In between the inlet interface and the outlet interface and inside the flow channel the piston provides the function of the check valve of opening and closing the flow channel against a sealing seat of the main body. The sealing seat is designed as a part of the main body of the check valve and/or as a separate means of the check valve. The sealing seat is preferably attached to and/or arranged on the main body. The piston is movable between an open position and a closing position. The movement of the piston is preferably guided by the piston holder. The piston spring applies force to the piston in the direction of the closing position. Thereby, the check valve is preferably designed as a normally closed valve. The inlet interface and the outlet interface preferably comprise attachment means for attaching the check valve to the high-pressure system, the manifold, a hydrogen line and/or any form of tube connector. The flow channel is at least partially arranged around the piston, preferably, the flow channel is arranged completely outside of the piston. The piston holder is designed to be attached to an inside of the main body of the check valve. Thereby, the piston holder is attached inside the flow channel of the check valve. The piston holder at least partially holds the piston and provides a counter means for the force of the piston spring to push the piston into the closing position. The piston holder is preferably attached steadily inside the check valve in order to design the piston movement between the open position and the closing position to open and close the flow channel relative to the piston holder and thereby relative to the main body. The piston holder is preferably designed to be attached to the main body on a side of the piston holder facing the outlet interface of the main body. Thereby the piston holder is preferably designed to allow for a movement of the piston between the attachment position of the piston holder and the sealing seat in order to open and close the check valve.

A check valve designed in this way is particularly advantageous because the check valve enables an advantageous flow of gas, especially hydrogen, through the flow channel of the check valve, whereby a high flow rate is made possible by the check valve in a particularly simple manner. The check valve according to the invention needs little space and/or provides a flow channel with a high volume and/or diameter for increased gas, especially hydrogen, flow.

According to an advantageous design of the invention, a check valve is provided, wherein the piston spring is at least partially arranged inside the piston holder and/or wherein piston is at least partially guided by the piston holder. As mentioned before, the piston holder is attached to the main body. Furthermore, the piston holder is preferably partially arranged inside the piston in order to guide the piston's movement on the piston holder. An especially advantageous design of the check valve comprises the piston spring being arranged inside the piston holder and the piston at the same time. With other words, the piston spring is preferably at least partially encapsulated by the piston holder and the piston. A check valve designed in this way is particularly advantageous because the design of the piston and/or the piston holder enable an advantageous flow of gas, especially hydrogen, through the flow channel of the check valve, whereby a high flow rate is made possible by the check valve in a particularly simple manner.

According to an advantageous design of the invention, a check valve is provided, wherein the check valve comprises a filter device, wherein the filter device is arranged inside the main body, wherein the filter device is attached to the main body by an attachment device of the filter device and/or wherein the filter device is arranged between the inlet interface and the sealing seat. A check valve with an attached and/or included filter device is especially advantageous since a gas flow from the refuelling infrastructure into the high-pressure H2-system is filtered by the filter device. The filter device preferably provides as little as possible flow resistance to the flow of gas. The filter device preferably provides 20 bar, especially 15 bar or less, of loss of pressure over the filter device. The filter device is incorporated into the main body of the check valve or comprises its own main body, which is attachable to the main body of the check valve. A check valve designed in this way is particularly advantageous because the filter device enables an advantageously filtered flow of gas, especially hydrogen, through the flow channel of the check valve, whereby a high flow rate is made possible by the check valve in a particularly simple manner.

According to an advantageous design of the invention, a check valve is provided, wherein the piston is designed as an at least partially closed piston, wherein the flow channel is arranged completely around the piston. The design of the closed piston is preferably understood with regards to the flow channel. According to this advantageous design of the check valve the flow channel does only flow round the piston and/or not through the piston and thereby making the piston a closed piston. The piston however is preferably still designed at least partially open and/or hollow, especially for the aforementioned arrangement of the piston spring and/or the piston holder at least partially inside the piston. The closed piston design allows for an especially advantageous design of the flow channel and a high flow rate through the check valve. The closed piston design preferably allows for a large flow channel diameter, while the check valve requires only little space for the main body. A check valve designed in this way is particularly advantageous because the design of the piston enables an advantageous flow of gas, especially hydrogen, through the flow channel of the check valve, whereby a high flow rate is made possible by the check valve in a particularly simple manner.

According to an advantageous design of the invention, a check valve is provided, wherein the piston holder comprises at least one flow opening for allowing the flow channel at least partially flow through the piston holder. Since the piston holder is attached to the inside of the main body, at least one flow opening advantageously provides an opening for the flow channel to flow through the piston holder. The piston holder preferably comprises a number of flow openings, wherein the flow openings are arranged symmetrically, on a circle line, evenly spaced and/or around a shaft of the piston holder. The number of flow openings and their size inside the piston holder correspond to the volume of flow being allowed through the piston holder. Therefore, the at least one flow opening of the piston holder preferably has a size of the at least one opening corresponding to at least 50 %, preferably at least 70 % or at least 85%, of the area of the piston holder inside the flow channel. A check valve designed in this way is particularly advantageous because the design of the piston holder enables an advantageous flow of gas, especially hydrogen, through the flow channel of the check valve, whereby a high flow rate is made possible by the check valve in a particularly simple manner.

According to an advantageous design of the invention, a check valve is provided, wherein the flow channel, especially an inner diameter of the main body and/or an outer diameter of the piston, are designed to allow for a flow of hydrogen through the check valve of up to 250 g/s, especially up to 275 g/s or up to 300 g/s. The high flow of hydrogen of up to 250 g/s, especially up to 275 gfs or up to 300 gfs through the check valve is made possible by the advantageous design of the flow channel, especially a relatively large inner diameter of the main body and/or a relatively small outer diameter of the piston, especially throughout the whole flow channel of the check valve. A check valve designed in this way is particularly advantageous because the design of the flow channel enables an advantageous flow of gas, especially hydrogen, through the flow channel of the check valve, whereby a high flow rate is made possible by the check valve in a particularly simple manner.

According to an advantageous design of the invention, a check valve is provided, wherein the inlet interface is attached to the main body and/or the inlet interface comprises a sealing member, wherein the sealing member is arranged at least partially inside the flow channel, so that the sealing member is radially pushable into a sealing area at least partially between the inlet interface and the main body by a pressure in the flow channel. The inlet interface is preferably attachable, screwable and/or monolithically connected to the main body. The preferred sealing member of the inlet interface and/or the main body provides a sealing between the inlet interface and the main body. The sealing member is preferably arranged in a way that it is in a pressure sharing contact with the pressure of the flow channel. Thereby, the sealing member is designed to be pushable into a sealing area between the inlet interface and the main body by the pressure of and/or inside the flow channel in order to increase the sealing effect of the sealing member. The inlet interface and/or the main body preferably comprise a cavity radially behind the sealing member for the sealing member to be pushed into by the pressure of and/or inside the flow channel in order to increase the sealing effect of the sealing member. A check valve designed in this way is particularly advantageous because the design of the sealing member of the inlet interface enables an advantageous sealing of the check valve and a flow of gas, especially hydrogen, through the flow channel of the check valve, whereby a high flow rate is made possible by the check valve in a particularly simple manner.

According to an advantageous design of the invention, a check valve is provided, wherein the outlet interface is attached to the main body and/or the outlet interface comprises a sealing member, wherein the sealing member is arranged at least partially inside the flow channel, so that the sealing member is radially pushable into a sealing area at least partially between the outlet interface and the main body by a pressure in the flow channel. The outlet interface is preferably attachable, screwable and/or monolithically connected to the main body. The preferred sealing member of the outlet interface and/or the main body provides a sealing between the outlet interface and the main body. The sealing member is preferably arranged in a way that it is in a pressure sharing contact with the pressure of the flow channel. Thereby, the sealing member is designed to be pushable into a sealing area between the outlet interface and the main body by the pressure of and/or inside the flow channel in order to increase the sealing effect of the sealing member. The outlet interface and/or the main body preferably comprise a cavity radially behind the sealing member for the sealing member to be pushed into by the pressure of and/or inside the flow channel in order to increase the sealing effect of the sealing member. A check valve designed in this way is particularly advantageous because the design of the sealing member of the outlet interface enables an advantageous sealing of the check valve and a flow of gas, especially hydrogen, through the flow channel of the check valve, whereby a high flow rate is made possible by the check valve in a particularly simple manner.

According to a second aspect of the invention, the invention discloses a manifold for a high-pressure H2-system. The manifold comprises at least one check valve according to the first aspect. The described manifold has all the advantages already described for the check valve according to the first aspect of the invention. The check valve and the manifold are preferably attached to each other, for example by screwing, pressing and/or clamping, or designed according to the following paragraph.

According to an advantageous design of the invention, a manifold is provided, wherein the main body of the check valve and a main body of the manifold are designed as one piece. With other words, the check valve or at least the main body of the check valve is designed as an integrated feature of the manifold.

Thereby, the manifold and the check valve are provided with a minimum requirement for space. A manifold designed in this way is particularly advantageous because the design of the manifold and the check valve, especially their combined main bodies, enables an advantageous flow of gas, especially hydrogen, through the flow channel of the check valve into the manifold, whereby a high flow rate is made possible by the check valve in a particularly simple manner.

A check valve for a high-pressure H2-system, especially for a manifold of the high-pressure H2-system, and a manifold according to the invention are explained in more detail below with reference to figures. The figures show schematically:
- Figure 1: in a side view a check valve with a manifold of a high-pressure H2-system,
- Figure 2: in a side view a check valve with a filter device, and
- Figure 3: in a perspective view and two axial views different designs of piston holders of a check valve.

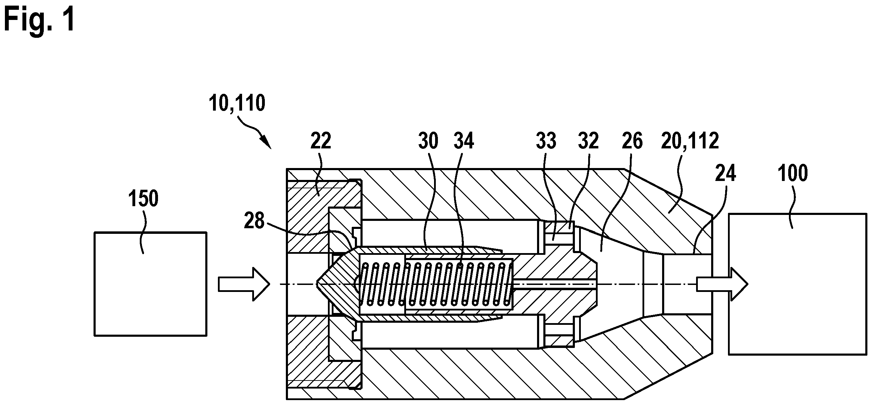

Features with the same function or principle of operation are each provided with the same reference signs in Figs. 1 to 3.

In Fig. 1, a side view of a check valve 10 with a manifold 110 of a high-pressure H2-system 100 is shown. The check valve 10 comprises a main body 20, which is designed as one piece with a main body 112 of the manifold 110. The main body 20 comprises an inlet interface 22 for connecting the check valve 10 to a refuelling infrastructure 150 and an outlet interface 24 for connecting the check valve 10 to the high-pressure system 100. The main body 20 comprises a flow channel 26 mutually connecting the inlet interface 22 to the outlet interface 24, a piston 30 being arranged in the main body 20 and being movable between an open position and a closing position to open and close the flow channel 26 against a sealing seat 28 of the main body 20. The piston 30 is shown in the closed position. The flow channel 26 is arranged around the piston 30. The check valve 10 further comprises a piston holder 32 with a piston spring 34, wherein the piston holder 32 and the piston spring 34 are partially arranged inside the piston 30, wherein the piston spring 34 is designed to push the piston 30 into the closing position, wherein the piston holder 32 is attached to an inside of the main body 20. The piston spring 34 is additionally partially arranged inside the piston holder 32 and the piston 30 is partially guided by the piston holder 32. The piston 30 is designed as a partially closed piston, wherein the flow channel 26 is arranged completely around the piston 30. The piston holder 32 comprises a number of flow openings 33 for allowing the flow channel 26 flow through the piston holder 32. The flow channel 26, here an inner diameter of the main body 20 and an outer diameter of the piston 30, are designed to allow for a flow of hydrogen through the check valve 10 of up to 300 g/s. The inlet interface 22 is attached to the main body 20.

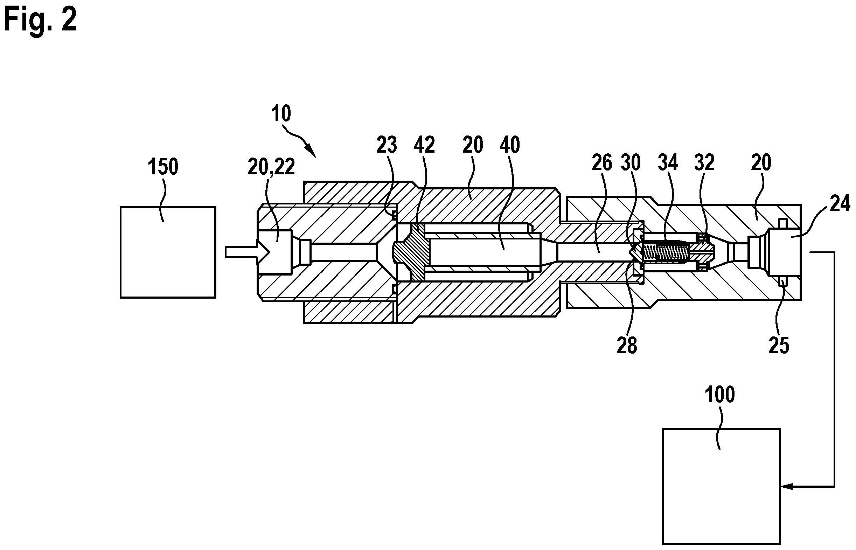

In Fig. 2, a side view of a check valve 10 with a filter device 40 is shown. The check valve 10 comprises a main body 20, which is designed as three pieces, which are screwed into each other. The main body 20 comprises an inlet interface 22 for connecting the check valve 10 to a refuelling infrastructure 150 and an outlet interface 24 for connecting the check valve 10 to the high-pressure system 100. The main body 20 comprises a flow channel 26 mutually connecting the inlet interface 22 to the outlet interface 24, a piston 30 being arranged in the main body 20 and being movable between an open position and a closing position to open and close the flow channel 26 against a sealing seat 28 of the main body 20. The piston 30 is shown in the closed position. The flow channel 26 is arranged around the piston 30. The check valve 10 further comprises a piston holder 32 with a piston spring 34, wherein the piston holder 32 and the piston spring 34 are partially arranged inside the piston 30, wherein the piston spring 34 is designed to push the piston 30 into the closing position, wherein the piston holder 32 is attached to an inside of the main body 20. The check valve 10 further comprises the filter device 40, wherein the filter device 40 is arranged inside the main body 20, wherein the filter device 40 is attached to the main body 20 by an attachment device 42 of the filter device 40 and wherein the filter device 40 is arranged between the inlet interface 22 and the sealing seat 28. The inlet interface 22 is attached to the main body 20 and the inlet interface 22 comprises a sealing member 23. The sealing member 23 is arranged partially inside the flow channel 26, so that the sealing member 23 is radially pushable into a sealing area between the inlet interface 22 and the main body 20 by a pressure in the flow channel 26.

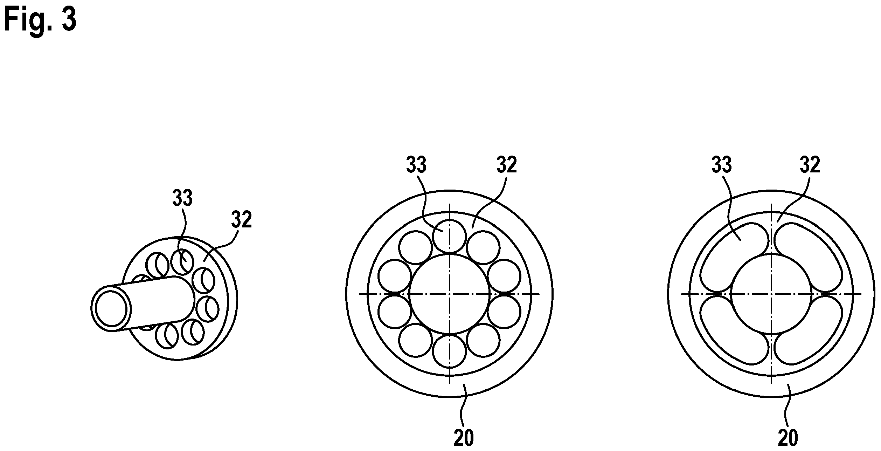

In Fig. 3, a perspective view and two axial views of different designs of piston holders 32 are shown. The piston holders 32 comprise different numbers and sizes of flow openings 33 for allowing the flow channel 26 at least partially flow through the piston holder 32. The piston holder 30 comprises a hollow shaft to guide the piston (not shown) on the outside and to partially include the piston spring (not shown) on the inside.

## Claims

1. Check valve (10) for a high-pressure H2-system (100), especially for a manifold (110) of the high-pressure H2-system (100), the check valve (10) comprising a main body (20) with an inlet interface (22) for connecting the check valve (10) to a refuelling infrastructure (150) and an outlet interface (24) for connecting the check valve (10) to the high-pressure system (100), wherein the main body (20) comprises a flow channel (26) mutually connecting the inlet interface (22) to the outlet interface (24) for fluid exchange, a piston (30) being arranged in the main body (20) and being movable between an open position and a closing position to open and close the flow channel (26) against a sealing seat (28) of the main body (20), wherein the flow channel (26) is arranged at least partially around the piston (30), a piston holder (32) with a piston spring (34), wherein the piston holder (32) and the piston spring (34) are at least partially arranged inside the piston (30), wherein the piston spring (34) is designed to push the piston (30) into the closing position, wherein the piston holder (32) is attached to an inside of the main body (20).

2. Check valve (10) according to claim 1,
**characterized in**
**that** the piston spring (34) is at least partially arranged inside the piston holder (32) and/or wherein piston (30) is at least partially guided by the piston holder (32).

3. Check valve (10) according to any of the previous claims,
**characterized in**
**that** the check valve (10) comprises a filter device (40), wherein the filter device (40) is arranged inside the main body (20), wherein the filter device (40) is attached to the main body (20) by an attachment device (42) of the filter device (40) and/or wherein the filter device (40) is arranged between the inlet interface (22) and the sealing seat (28).

4. Check valve (10) according to any of the previous claims,
**characterized in**
**that** the piston (30) is designed as an at least partially closed piston, wherein the flow channel (26) is arranged completely around the piston (30).

5. Check valve (10) according to any of the previous claims,
**characterized in**
**that** the piston holder (32) comprises at least one flow opening (33) for allowing the flow channel (26) at least partially flow through the piston holder (32).

6. Check valve (10) according to any of the previous claims,
**characterized in**
**that** the flow channel (26), especially an inner diameter of the main body (20) and/or an outer diameter of the piston (30), are designed to allow for a flow of hydrogen through the check valve (10) of up to 250 g/s, especially up to 275 g/s or up to 300 g/s.

7. Check valve (10) according to any of the previous claims,
**characterized in**
**that** the inlet interface (22) is attached to the main body (20) and/or the inlet interface (22) comprises a sealing member (23), wherein the sealing member (23) is arranged at least partially inside the flow channel (26), so that the sealing member (23) is radially pushable into a sealing area at least partially between the inlet interface (22) and the main body (20) by a pressure in the flow channel (26).

8. Check valve (10) according to any of the previous claims,
**characterized in**
hat the outlet interface (24) is attached to the main body (20) and/or the outlet interface (24) comprises a sealing member (25), wherein the sealing member (25) is arranged at least partially inside the flow channel (26), so that the sealing member (25) is radially pushable into a sealing area at least partially between the outlet interface (24) and the main body (20) by a pressure in the flow channel (26).

9. Manifold (110) for a high-pressure H2-system (100), the manifold (110) comprising at least one check valve (10) according to any of the previous claims.

10. Manifold (110) according to claim 9,
**characterized in**
**that** the main body (20) of the check valve (10) and a main body (112) of the manifold (110) are designed as one piece.
